# EUROPÄISCHE PATENTSCHRIFT

(11) **EP 2 488 557 B1**
(45) Veröffentlichungstag und Bekanntmachung des Hinweises auf die Patenterteilung: **28.05.2014**
(21) Anmeldenummer: 11738417.2
(22) Anmeldetag: 07.07.2011
(51) Int. Cl.: C08F 6/00, C08F 2/30, C08F 210/02, C08F 218/04, B01J 19/18, C08F 218/08, C08F 2/22, C09D 131/04, C08L 23/02, C08L 31/00

(54) **VERFAHREN ZUR KONTINUIERLICHEN EMULSIONSPOLYMERISATION**
PROCESS FOR CONTINUOUS EMULSION POLYMERIZATION
PROCÉDÉ DE POLYMÉRISATION EN ÉMULSION CONTINUE

(30) Priorität: 14.07.2010 DE 102010031339
(43) Veröffentlichungstag der Anmeldung: 22.08.2012
(73) Patentinhaber: Wacker Chemie AG, 81737 München (DE)
(72) Erfinder: HAIN, Jessica, 84539 Zangberg (DE); KOTSCHI, Udo, 84489 Burghausen (DE); WEITZEL, Hans-Peter, 84571 Reischach (DE)
(74) Vertreter: Schuderer, Michael
(86) Internationale Anmeldenummer: PCT/EP2011/061544
(87) Internationale Veröffentlichungsnummer: WO 2012/007356

(56) Entgegenhaltungen:
- EP-A1- 1 174 445
- EP-A1- 1 323 752
- EP-A1- 2 088 162
- DE-A1-102007 028 332

## Beschreibung

Die Erfindung betrifft ein Verfahren zur wässrigen, radikalisch initiierten, kontinuierlichen Emulsionspolymerisation von Vinylestern, Ethylen und gegebenenfalls weiteren ethylenisch ungesättigten, funktionalisierten Monomeren.

Aus dem Stand der Technik ist bekannt, dass funktionelle Monomere, wie beispielsweise hydrolysierbare Vinylsilane, zur Verbesserung der Eigenschaften von Polymerdispersionen bei deren Verwendung als Bindemittel in Farben beitragen.

Die US-A 3729438 beschreibt Latices auf der Basis von Vinylacetat-Vinylsilan-Mischpolymerisaten mit 0,5 bis 1,0 % VinylsilanAnteil. Die Latices werden im diskontinuierlichen Emulsionspolymerisationsverfahren hergestellt, in Gegenwart von nichtionischem oder anionischem Emulgator, vorzugsweise von Gemischen aus nichtionischen und anionischen Emulgatoren.

Die DE-A 2148457 beschreibt ein Verfahren zur Herstellung von silanolgruppenhaltigen Polymerdispersionen mit stark verbesserter Nasshaftung der erfindungsgemäßen Bautenbeschichtungsmittel. Die DE-A 2148458 beschreibt ein Verfahren zur Herstellung von Vinylacetat-Vinylsilan-Copolymeren im diskontinuierlichen Emulsionspolymerisationsverfahren, in Gegenwart von anionischen, kationischen und/oder nichtionischen Emulgatoren und/oder Schutzkolloiden.

Aus der EP 0327006 A2 sind Copolymerisatdispersionen mit einem Gehalt von 0,05 - 2 Gew.-% an Monomereinheiten aus ungesättigten hydrolysierbaren organischen Siliciumverbindungen bekannt, die in emissionsarmen Dispersionsfarben, Anstrichmitteln oder Dispersionsputzen Anwendung finden. Zur Stabilisierung der wässrigen Dispersion wird Hydroxyethylcellulose, nichtionischer Emulgator und Vinylsulfonat eingesetzt.

Die EP 327376 A2 beschreibt Vinylestercopolymerisate mit einem Vinylsilananteil von bis zu 0,8 Gew.-%, als Bindemittel für Farbzusammensetzungen mit hoher Scheuerfestigkeit. Die Herstellung erfolgt mittels diskontinuierlicher Emulsionspolymerisation in Gegenwart von Emulgatoren und/oder Schutzkolloiden.

Die EP 612771 A1 betrifft wässrige Kunststoffdispersionen zur Herstellung von emissionsarmen Dispersionsfarben auf der Basis von Copolymerisaten, welche als funktionelle Monomereinheiten Vinylsilan in Kombination mit (Meth)acrylamid und/oder (Meth)-acrylsäure enthalten. Die Herstellung erfolgt im Batchverfahren in Gegenwart von anionischen Emulgatoren oder deren Gemischen mit nichtionischen Emulgatoren.

Im Bericht zum Fatipec-Kongress vom 10.6.-14.6.1996 werden die Eigenschaften von VAE-Copolymerdispersionen als Bindemittel in hochgefüllten Farben untersucht, insbesondere im Hinblick auf das verwendete Copolymer und den Einfluß des Emulgator-Schutzkolloid-Systems. Besonders vorteilhaft werden VAE-Copolymere mit einem Gehalt von < 1 % an Vinylsilan-Einheiten, welche in Gegenwart von Schutzkolloid und nichtionischem Emulgator hergestellt worden sind, dargestellt. Eine Erhöhung des Emulgatorgehalts von 1,5 auf 5 % bewirkte eine Verringerung der Teilchengröße sowie der Tg und führte zu einer Verbesserung des Pigmentbindevermögens.

Der wesentlich Durchbruch bei der Entwicklung von Bindemitteln für Beschichtungsmittel mit hoher Naßabriebsbeständigkeit gelang mit den VAE-Copolymerisaten mit Vinylsilan- und Epoxyfunktionellen Comonomereinheiten gemäß der EP 1153979 A2. Die Herstellung erfolgt in diskontinuierlicher Emulsionspolymerisation in Gegenwart von Gemischen aus nichtionischen und anionischen Emulgatoren.

Zur Verbesserung der Hydrophobie solcher Bindemittel aus der EP 1153979 A2 wird in der EP 1308468 A1 vorgeschlagen, diese mit Polysiloxan-Einheiten zu modifizieren.

In der WO 2006/111290 A1 wird empfohlen Beschichtungsmittel mit hoher Scheuerfestigkeit auf der Basis von VAE-Copolymeren mit Silan- und Epoxy-Monomereinheiten einzusetzen, wobei diese Bindemittel mit den bereits aus der EP 1153979 A2 beschriebenen nichtionischen Emulgatoren und Sulfosuccinaten hergestellt werden.

In der EP 2017313 A1 wird empfohlen die Herstellung von Bindemitteln für Beschichtungsmittel mit hoher Bewitterungsbeständigkeit, auf der aus der EP 1153979 A2 bekannten Basis von Vinylesterpolymerisaten mit silanfunktionellen und epoxyfunktionellen Comonomereinheiten, so zu gestalten, dass in einer ersten Stufe Vinylester und gegebenenfalls weitere Monomere zusammen mit Emulgator und/oder Schutzkolloid zugegeben werden und nach Abklingen der Polymerisationsreaktion weitere Monomere zugegeben werden und die Polymerisation erneut gestartet wird.

In der EP 2166050 A2 wird versucht die Nassabriebfestigkeit der aus der EP 1153979 A2 bekannten Vinylester-Mischpolymerisate mit silan- und epoxyfunktionellen Comonomereinheiten mittels Abmischen mit Acrylat-Latex zu verbessern.

Vinylacetat-Ethylen-Copolymerisate, welche Vinylsilan- und Epoxy-Monomereinheiten enthalten, sind in der Anwendung in Beschichtungsmittel bezüglich Nassabriebfestigkeit kaum zu verbessern. Problematisch ist allerdings deren Herstellung im diskontinuierlichen Emulsionspolymerisationsverfahren, insbesondere wegen der langen Zykluszeit von Batch-Prozessen wie dem aus EP 1153979 A2, oder wegen der sehr aufwändigen, mehrstufigen Verfahren aus EP 2017313 A1 und EP 2166050 A2.

Kontinuierliche Polymerisationsverfahren bieten gegenüber den häufig angewendeten Batch- oder Semibatch-Prozessen den Vorteil einer effizienteren Anlagenausnutzung. Stillstandszeiten durch Reinigungs- und Vorbereitungsphasen, die zwischen einzelnen Batch-Ansätzen eingeschoben werden müssen, finden kaum Berücksichtigung, sodass deutlich höhere Kapazitäten und niedrigere Herstellkosten erzielt werden können. Nachteil der kontinuierlichen Polymerisation ist jedoch, dass sich Produkteigenschaften im Vergleich zum Batch-Prozess teilweise nachteilig verändern. Beispielsweise ist bekannt, dass die Stabilisierung kontinuierlich hergestellter Dispersionen als kritisch zu betrachten ist. Bedingt durch eine breite Verweilzeitverteilung werden meist breiter verteilte und grobteiligere Dispersionen erhalten. Für die Anwendung in Beschichtungsmitteln sind die Partikelgröße und deren Verteilung wichtige Größen, die sich auf anwendungstechnischen Eigenschaften, wie beispielsweise die Nassabriebsbeständigkeit, von mit diesen Bindemitteln vergüteten Farben, auswirken. Eine Verschiebung der Partikelgrößenverteilung in einen größeren Bereich hat somit eine Abnahme der Nassabriebsbeständigkeit zur Folge.

Als favorisierte Anlagenkonfiguration für die kontinuierliche Polymerisation wird häufig die Rührkesselkaskade gewählt, da die Polymerisation in Rührkesselreaktoren aus dem Batch-Prozess bekannt ist und der Aufwand für die Umrüstung einer Anlage im Vergleich zu anderen bekannten kontinuierlichen Anlagen, wie beispielsweise einem Rohrreaktor, vergleichbar gering ist. Die Schwierigkeit stellt vor allem die Einstellung geeigneter und stabiler Prozessbedingungen dar. Daher sind Prozessschwankungen und unregelmäßige Produkteigenschaften nicht selten. Belegungen der Reaktorwände und eine oszillierende Partikelgröße sind als Folgen zu nennen.

Aus Petrocelli, Polym. Sci. Eng., 80, 544 ist ein Verfahren zur kontinuierlichen Emulsionspolymerisation bekannt, bei welchem in zwei hintereingeschalteten Druckreaktoren polymerisiert wird. Dabei werden die Monomere, Polyvinylalkohol und Saatlatex dem ersten Druckreaktor kontinuierlich zudosiert und in gleicher Menge dem zweiten Druckreaktor Polymerdispersion entnom-men. Nachteilig ist hier neben der Verwendung von Saatlatex die Zunahme der Teilchengröße gegenüber dem Batchverfahren, da eine Teilchengrößenzunahme in Beschichtungsmitteln eine Abnahme der Nassabriebfestigkeit bewirkt.

In der DE-A 2456576 wird ein Verfahren zur kontinuierlichen Polymerisation von Vinylacetat-Ethylen-Dispersionen in einem Druckreaktor mit nachgeschaltetem Reaktionsrohr beschrieben. Zur Vermeidung von Wandanlagerung und zur Sicherstellung eines gleichmäßigen Verlaufs der Polymerisation wird empfohlen ein Redoxinitiatorgemisch einzusetzen, welches einen 3 bis 10-fachen Überschuß an Reduktionsmittel enthält.

Aus der EP 5073 B1 ist ein Verfahren zur kontinuierlichen Emulsionspolymerisation von Vinylacetat und Ethylen bekannt, bei dem die Edukte in Vormixern bereitgestellt werden und zusammen mit Saatlatex in einen Druckreaktor überführt werden. Das Produkt aus dem Druckreaktor wird dann in einen Nachpolymerisationsreaktor übergeführt.

Die EP 1067147 A2 beschreibt ein kontinuierliches Polymerisationsverfahren zur Herstellung von hochfeststoffhaltigen Vinylacetat-Ethylen-Copolymerdispersionen. Zur kontinuierlichen Polymerisation wird Saatlatex eingesetzt und zur Stabilisierung ausschließlich Polyvinylalkohol verwendet und kein Emulgator eingesetzt. Die Polymerisation erfolgt in zwei hintereinandergeschalteten Druckreaktoren und einem Entgasungsreaktor. Monomere, Saatlatex und PVOH werden im 1. Reaktor kontinuierlich zugegeben.

In der EP 1174445 A1 wird ein Verfahren zur kontinuierlichen Polymerisation von Vinylester-Ethylen-Copolymerisaten beschrieben, bei dem die Reduktionskomponente des Redoxinitiators zumindest teilweise im ersten Reaktor zudosiert wird. Es werden grobteiligere Polymerpartikel mit einem gewichtsmittleren Durchmesser oberhalb von 1000 nm erhalten.

Die EP 1323752 A1 beschreibt ein Verfahren zur kontinuierlichen Polymerisation von Schutzkolloid-stabilisierten Polymerisaten auf Basis von Vinylestern und Ethylen. Mit Polyvinylalkohol als verwendetem Schutzkolloid werden Dispersionen mit einem gewichtsmittleren Durchmesser Dw von 800 bis 1400 nm erhalten, wobei das Schutzkolloid in beide Reaktoren zudosiert wird. Diese Form der Partikelstabilisierung liefert für die Herstellung von Dispersionen der hier beschriebenen Anwendung (Bindemittel in Farben) eine unzureichende Teilchengrößenverteilung.

Die DE 10 2007 028 332 A1 beschreibt ein Verfahren zum Beschicken eines Reaktors mit einem Katalysatorfestbett, welches wenigstens ringförmige Katalysatorformkörper K umfasst. Die Herstellung von Polymerisaten mittels Emulsionspolymerisation wird nicht behandelt.

Die EP 2088162 A1 beschreibt ein Verfahren zur Emulsionspolymerisation von ethylenisch ungesättigten Monomeren, wobei zur Beschleunigung der Polymerisation so polymerisiert wird, dass mindestens 60 % des Gesamtumsatzes der Polymerisation bei einer Temperatur von 100°C bis 160°C abläuft. Ziel ist es die Dauer der Polymerisationsphase zwischen Einsetzen der Wärmetönung der Polymerisation und dem Erreichen von 95 % des Monomerumsatzes auf weniger als zwei Stunden zu begrenzen. Beschrieben wird die Umsetzung dieses Konzepts in einem Batchverfahren.

Daher war die Aufgabe der Erfindung ein effizientes Verfahren zur Herstellung von Polymerisaten in Form deren wässrigen Dispersionen auf Basis von Vinylestern, Ethylen und gegebenenfalls weiteren ethylenisch ungesättigten, funktionalisierten Comonomeren mittels radikalisch initiierter kontinuierlicher Emulsionspolymerisation zu entwickeln, mit dem auch gute anwendungstechnische Eigenschaften, insbesondere in Beschichtungsstoffen, erzielt werden können.

Gegenstand der Erfindung ist ein Verfahren zur wässrigen, mit einem Redoxsystem aus Oxidations - und Reduktionskomponente radikalisch initiierten, kontinuierlichen Emulsionspolymerisation von A) mindestens einem Vinylester und gegebenenfalls mindestens einem (Meth)acrylsäureester, B) Ethylen, und C) 0 bis 10 Gew.-%, bezogen auf das Gesamtgewicht der Monomere, von einem oder mehreren ethylenisch ungesättigten, funktionalisierten Comonomeren,
in Gegenwart von 3,0 bis 12,5 Gew.-%, bezogen auf das Gesamtgewicht der Monomere , von einem oder mehreren Emulgatoren, wobei mindestens 50 Gew.-%, bezogen auf das Gesamtgewicht an Emulgatoren, nichtionische Emulgatoren sind,
und 0 bis 10 Gew.-%, bezogen auf das Gesamtgewicht der Monomere , von einem oder mehreren Schutzkolloiden,
in einer Rührkesselkaskade mit mindestens zwei hintereinander geschalteten Druckreaktoren und daran anschließend mindestens einem Niederdruckreaktor,
wobei gegebenenfalls vor Beginn der Polymerisation die Druckreaktoren zu 50 bis 80% des Volumens mit eines Polymerdispersion befüllt werden,
wobei in den Druckreaktoren bei einer Temperatur von 50°C bis 90°C und einem Druck von 10 bis 90 bar abs. polymerisiert wird, und die Polymerisation so geführt wird, dass mindestens 80 Gew.-% des Gesamtgewichts an Emulgatoren im ersten Druckreaktor zudosiert werden,
und in den ersten Druckreaktor jeweils mindestens 50 Gew.-% des Gesamtgewichts an Comonomer A) und Ethylen zugegeben werden,
in die folgenden Druckreaktoren die verbleibenden Mengen der Monomere A) und Ethylen zugegeben werden,
und die Polymerisation im ersten Druckreaktor bis zu einem Monomerumsatz von ≥ 30 Gew.-%, bezogen auf das Gesamtgewicht der im Verfahren eingesetzten Monomere, und im letzten Druckreaktor bis zu einem Monomerumsatz von ≥ 90 Gew.-%, bezogen auf das Gesamtgewicht der im Verfahren eingesetzten Monomere, geführt wird,
und in dem mindestens einen Niederdruckreaktor bei einer Temperatur von 30°C bis 60°C und einem Druck von höchstens 4 bar abs. auspolymerisiert wird.

Unter kontinuierlicher Polymerisation versteht man ein Polymerisationsverfahren bei welchem dem Polymerisationsreaktor oder einer Reaktorkaskade kontinuierlich Edukte zugeführt werden und in gleichem Maße kontinuierlich das Polymerisationsprodukt entnommen wird; das heißt der aus dem kontinuierlichen Prozess resultierende Volumenstrom ist gleich der Summe aller dem Prozess kontinuierlich zugeführten Teilströme .

Geeignete Monomere A) aus der Gruppe der Vinylester sind solche von Carbonsäuren mit 1 bis 12 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Hexion). Besonders bevorzugt ist Vinylacetat. Die genannten Vinylester werden im allgemeinen in einer Menge von 30 bis 90 Gew.-%, vorzugsweise 70 bis 90 Gew.-%, jeweils bezogen auf das Gesamtgewicht der Monomere, copolymerisiert.

Geeignete Monomere A) aus der Gruppe der Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, Ethylacrylat, n-Butylacrylat n-Butylmethacrylat, Hexylacrylat und 2-Ethylhexylacrylat. Diese Comonomere werden gegebenenfalls in einer Menge bis 20 Gew.-%, vorzugsweise 5 bis 20 Gew. -%, jeweils bezogen auf das Gesamtgewicht der Monomere, copolymerisiert.

Das Monomer B), Ethylen, wird im allgemeinen in einer Menge von 1 bis 30 Gew.-%, vorzugsweise 10 bis 30 Gew.-%, jeweils bezogen auf das Gesamtgewicht der Monomere, copolymerisiert.

Gegebenenfalls können zusätzlich zu den Monomeren A) und B) noch 0,05 bis 10 Gew.-%, bezogen auf das Gesamtgewicht der Monomere, Hilfsmonomere D) copolymerisiert werden. Beispiele für Hilfsmonomere D) sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Als Hilfsmonomere geeignet sind auch Monomere mit Hydroxy oder Carboxyl-Gruppen, wie beispielsweise Methacrylsäure- und Acrylsäurehydroxyalkylester wie Hydroxyethyl-, Hydroxypropyl- oder Hydroxybutylacrylat oder - methacrylat sowie 1,3-Dicarbonylverbindungen wie Acetacetoxyethylacrylat, Acetacetoxypropylmethacrylat, Acetacetoxyethylmethacrylat, Acetacetoxybutylmethacrylat, 2,3- Di(acetacetoxy)-propylmethacrylat und Acetessigsäureallylester.

Bevorzugte Hilfsmonomere D) sind ethylenisch ungesättigte Mono- und Dicarbonsäuren, ethylenisch ungesättigte Carbonsäureamide und -nitrile, ethylenisch ungesättigte Sulfonsäuren bzw, deren Salze.

Geeignete ethylenisch ungesättigte, funktionalisierte Monomere C) sind ethylenisch ungesättigte, hydrolysierbare Siliciumverbindungen und ethylenisch ungesättigte epoxidgruppenhaltige Verbindungen. Diese können insgesamt in einer Menge von bis zu 10 Gew.-%, bezogen auf das Gesamtgewicht der Monomere copolymerisiert werden. Es können ein oder mehrere ethylenisch ungesättigte, hydrolysierbare Siliciumverbindungen copolymerisiert werden, oder ein oder mehrere ethylenisch ungesättigte epoxidgruppenhaltige Verbindungen copolymerisiert werden, oder Gemische aus mindestens einer ethylenisch ungesättigten, hydrolysierbaren Siliciumverbindung und mindestens einer ethylenisch ungesättigten epoxidgruppenhaltigen Verbindung copolymerisiert werden.

Beispiele für ethylenisch ungesättigte, hydrolysierbare Siliciumverbindungen sind Verbindungen der allgemeinen Formel R¹SiR₀₋₂(OR²)₁₋₃, wobei R die Bedeutung C₁- bis C₃-Alkylrest, C₁-bis C₃-Alkoxyrest oder Halogen (z.B. Cl oder Br) hat, R¹ die Bedeutung CH₂=CR³-(CH₂)₀₋₁ oder CH₂=CR³CO₂(CH₂)₁₋₃ hat, R² ein unverzweigter oder verzweigter, gegebenenfalls substituierter Alkylrest oder Acylrest mit 1 bis 12 C-Atomen ist, der gegebenenfalls durch eine Ethergruppe unterbrochen sein kann, und R³ für H oder CH₃ steht. Beispiele hierfür sind Vinyltrimethoxysilan, Vinyltriethoxysilan, Vinyltripropoxysilan, vinyltriisopropoxysilan, Vinyltributoxysilan, Vinyltriacetoxysilan, 3-methacryloxypropyltrimethoxysilan, 3-Methacryloxypropyltriethoxysilan, Vinyltrichlorsilan, Vinylmethyldichlorsilan, Vinyltris-(2-methoxy-ethoxysilan), Trisacetoxyvinylsilan.

Weitere Beispiele für ethylenisch ungesättigte, hydrolysierbare Siliciumverbindungen sind α-Silane, bei denen das mit Alkoxy- oder OH-Gruppe substituierte Siliciumatom, direkt über eine Methylenbrücke mit einem ungesättigten Kohlenwasserstoffrest verbunden ist, beispielsweise α-Methacryloxymethylmethoxydimethylsilan, α-Methacryloxymethyldimethoxymethylsilan, α-Methacryloxymethyltrimethoxysilan.

Bevorzugt sind γ-Acryl- und γ-Methacryloxypropyltri(alkoxy)silane, Vinylalkyldialkoxysilane und Vinyltrialkoxysilane mit C1- bis C12-Alkoxygruppen und gegebenenfalls C1- bis C3-Alkylgruppen, wobei als C1- bis C12-Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können, sowie α-Silane. Als ethylenisch ungesättigte, hydrolysierbare Siliciumverbindungen werden Vinyltrimethoxysilan, Vinyltriethoxysilan, 3-Methacryloxypropyltrimethoxysilan, 3-Methacryloxypropyltriethoxysilan, α-Methacryloxymethyltriethoxysilan am meisten bevorzugt.

Der Anteil an ethylenisch ungesättigten, hydrolysierbaren Siliciumverbindungen C) beträgt vorzugsweise 0,05 bis 5.Gew.-%, besonders bevorzugt 0,1 bis 1 Gew.-%, jeweils bezogen auf das Gesamtgewicht der Monomere.

Geeignete ethylenisch ungesättigte, funktionalisierte Monomere C) sind auch ethylenisch ungesättigte epoxidgruppenhaltige Verbindungen, wie beispielsweise Glycidylmethacrylat, Glycidylacrylat, Allylglycidether, Vinylglycidether, Vinylcyclohexanoxid, Limonenoxid, Myrcenoxid, Caryophyllenoxid und mit einem Glycidrest am Aromaten substituierte Styrole und Vinyltoluole sowie mit Glycidylresten am Aromaten substituierte Vinylbenzoate. Bevorzugt sind Glycidylacrylat, Glycidylmethacrylat, Allylglycidether und Vinylglycidether.

Der Anteil an ethylenisch ungesättigten epoxidgruppenhaltigen Monomere C) beträgt vorzugsweise 0,1 bis 5 Gew.-%, besonders bevorzugt 0,25 bis 1,5 Gew.-%, jeweils bezogen auf das Gesamtgewicht der Monomere.

Am meisten bevorzugt werden 0,05 bis 5 Gew.-% mindestens einer ethylenisch ungesättigten, hydrolysierbaren Siliciumverbindung und 0,1 bis 5 Gew.-% mindestens einer ethylenisch ungesättigten epoxidgruppenhaltigen Verbindung, jeweils bezogen auf das Gesamtgewicht der Monomere, copolymerisiert.

Die Angaben in Gew.-% für die Monomere A), B), C) und Hilfsmonomere D) addieren sich dabei jeweils auf 100 Gew.-% für das Gesamtgewicht der copolymerisierten Monomere auf.

Bevorzugt werden Comonomergemische, welche Vinylacetat und Ethylen enthalten, besonders bevorzugt 70 bis 90 Gew.-% Vinylacetat und 1 bis 30 Gew.-% Ethylen enthalten; sowie Comonomermischungen, welche 50 bis 90 Gew.-% Vinylacetat und 1 bis 30 Gew.-% Ethylen, besonders bevorzugt 10 bis 30 Gew.-% Ethylen, und vorzugsweise 1 bis 20 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11 enthalten;
und Comonomergemische von Vinylacetat, mit 1 bis 30 Gew.-% Ethylen, besonders bevorzugt 10 bis 30 Gew.-% Ethylen, und vorzugsweise 1 bis 20 Gew.-% Acrylsäureester von unverzweigten oder verzweigten Alkoholen mit 1 bis 15 C-Atomen, insbesondere Methylacrylat, Methylmethacrylat, Ethylacrylat, n-Butylacrylat, n-Butylmethacrylat, Hexylacrylat oder 2-Ethylhexylacrylat;
und Gemische von Vinylacetat, 1 bis 20 Gew.-% Vinyllaurat oder Vinylester einer alpha-verzweigten Carbonsäure mit 9 bis 11 C-Atomen, sowie 1 bis 20 Gew.-% Acrylsäureester von unverzweigten oder verzweigten Alkoholen mit 1 bis 15 C-Atomen, insbesondere Methylacrylat, Methylmethacrylat, Ethylacrylat, n-Butylacrylat n-Butylmethacrylat, Hexylacrylat oder 2-Ethylhexylacrylat;
wobei die Gemische noch die genannten Hilfsmonomere D) und funktionalisierten Monomere C) in den genannten Mengen enthalten können;
und sich die Angaben in Gew.-% für die einzelnen Gemische auf jeweils 100 Gew.-% aufaddieren.

Die Monomerauswahl bzw. die Auswahl der Gewichtsanteile der Co-monomere erfolgt dabei so, dass im allgemeinen eine Glasübergangstemperatur Tg von -50°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise voraus berechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n-steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Initiierung der Polymerisation erfolgt mit den für die Emulsionspolymerisation gebräuchlichen Redox-Initiator-Kombinationen. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Bevorzugt werden die Natrium-, Kalium- und Ammoniumsalze der Peroxodischwefelsäure und Wasserstoffperoxid. Die genannten Initiatoren werden im allgemeinen in einer Menge von 0,01 bis 2,0 Gew.-%, bezogen auf das Gesamtgewicht der Monomere, eingesetzt.

Die genannten Oxidationsmittel, insbesondere die Salze der Peroxodischwefelsäure, können auch alleinig als thermische Initiatoren eingesetzt werden.

Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Bevorzugt werden Natriumhydroxymethansulfinat und Natriumsulfit eingestezt. Die Reduktionsmittelmenge beträgt vorzugsweise 0,015 bis 3 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf das Gesamtgewicht der zu polymerisierenden Monomere, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Als Emulgatoren werden nichtionische Emulgatoren, gegebenenfalls in Kombination mit anionischen Emulgatoren, eingesetzt. Geeignete nichtionische Emulgatoren sind beispielsweise Acyl-, Alkyl-, Oleyl- und Alkylarylethoxylate. Diese Produkte sind beispielsweise im Handel unter der Bezeichnung Genapol ^{(R)} oder Lutensol^{(R)} erhältlich. Hierunter fallen ethoxylierte Mono-, Di- und Tri-Alkylphenole, vorzugsweise mit einem Ethoxylierungsgrad von 3 bis 50 Ethylenoxid-Einheiten und C₄- bis C₁₂-Alkylresten, sowie ethoxylierte Fettalkohole, vorzugsweise mit einem Ethoxylierungsgrad von 3 bis 80 Ethylenoxid-Einheiten und C₈- bis C₃₆-Alkylresten. Geeignete nichtionische Emulgatoren sind auch C₁₃-C₁₅-Oxoalkoholethoxylate mit einem Ethoxylierungsgrad von 3 bis 30 Ethylenoxid-Einheiten, C₁₆-C₁₈-Fettalkoholethoxylate mit einem Ethoxylierungsgrad von 11 bis 80 Ethylenoxid-Einheiten, C₁₀-Oxoalkoholethoxylate mit einem Ethoxylierungsgrad von 3 bis 11 Ethylenoxid-Einheiten, C₁₃-Oxoalkoholethoxylate mit einem Ethoxylierungsgrad von 3 bis 20 Ethylenoxid-Einheiten, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, Polyethylenoxid-Ether von Oleylalkohol mit einem Ethoxylierungsgrad von 4 bis 20 Ethylenoxid-Einheiten sowie die Polyethylenoxid-Ether von Nonylphenol mit einem Ethoxylierungsgrad von 4 bis 20 Ethylenoxid-Einheiten.

Besonders bevorzugt sind C₁₂-C₁₄-Fettalkoholethoxylate mit einem Ethoxylierungsgrad von 3 bis 20 Ethylenoxid-Einheiten.

Gegebenenfalls können auch Mischungen aus nichtionischen und anionischen Emulgatoren eingesetzt werden. Beispiele für geeignete anionische Emulgatoren sind Natrium-, Kalium- und Ammoniumsalze von geradkettigen aliphatischen Carbonsäuren mit 12 bis 20 C-Atomen; Natriumhydroxyoctadecansulfonat; Natrium-, Kalium- und Ammoniumsalze von Hydroxyfettsäuren mit 12 bis 20 C-Atomen und deren Sulfonierungs- und/oder Acetylierungsprodukte; Natrium-, Kalium- und Ammoniumsalze von Alkylsulfaten, auch als Triethanolaminsalze, und Natrium-, Kalium- und Ammoniumsalze von Alkylsulfonaten mit jeweils 10 bis 20 C-Atomen und von Alkylarylsulfonaten mit 12 bis 20 C-Atomen; Dimethyldialkylammoniumchlorid mit 8 bis 18 C-Atomen und deren Sulfonierungsprodukte; Natrium-, Kalium- und Ammoniumsalze von Sulfobernsteinsäureestern mit-aliphatischen gesättigten einwertigen Alkoholen mit 4 bis 16 C-Atomen und Sulfobernsteinsäure-4-Estern mit Polyethylenglykolethern von einwertigen aliphatischen Alkoholen mit 10 bis 12 C-Atomen, insbesondere deren Di-Natriumsalze, und von Sulfobernsteinsäure-4-Ester mit Polyethylenglykolnonylphenylether, insbesondere dessen Di-Natriumsalz, und von Sulfobernsteinsäure-bis-cyclohexylester, insbesondere dessen Natriumsalz; Ligninsulfonsäure sowie deren Calcium-, Magnesium-, Natrium- und Ammoniumsalze; Harzsäuren sowie hydrierte und dehydrierte Harzsäuren sowie deren Alkalisalze.

Am meisten bevorzugte anionische Emulgatoren sind die Natrium-, Kalium- und Ammoniumsalze von Alkylsulfaten und von Alkylsulfonaten mit jeweils 10 bis 20 C-Atomen, sowie von Alkylarylsulfonaten mit 12 bis 20 C-Atomen, und von Sulfobernsteinsäureestern mit aliphatischen gesättigten einwertigen Alkoholen mit 4 bis 16 C-Atomen.

Die Emulgatormenge beträgt 3 bis 12,5 Gew.-%, vorzugsweise 3 bis 7 Gew.-%, jeweils bezogen auf das Gesamtgewicht der Monomere. Es kann ausschließlich nichtionischer Emulgator eingesetzt werden. Bevorzugt werden Gemische aus einem oder mehreren nichtionischen Emulgatoren und einem oder mehreren anionischen Emulgatoren eingesetzt, wobei der Anteil der nichtionischen Emulgatoren im Gemisch mindestens 50 Gew.-%, vorzugsweise mindestens 75 Gew.-%, jeweils bezogen auf das Gesamtgewicht an nichtionischem und anionischem Emulgator beträgt.

Zusätzlich zu den genannten Emulgatoren werden besonders bevorzugt noch Schutzkolloide als oberflächenaktive Verbindungen eingesetzt.

Geeignete Schutzkolloide sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Gaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt wird der Einsatz von teilverseiften oder vollverseiften Polyvinylalkoholen, besonders bevorzugt aus der Gruppe der teilverseiften Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden. Weitere bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0,1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas.

Bei dem erfindungsgemäßen Verfahren werden am meisten bevorzugt Polyvinylalkohole mit einem Hydrolysegrad von 85 bis 94 Mol-% und einer Höpplerviskosität, in 4 %-iger wässriger Lösung von 3 bis 25 mPas (Methode nach Höppler bei 20°C, DIN 53015) eingesetzt. Die genannten Schutzkolloide sind mittels dem Fachmann bekannter Verfahren zugänglich.

Die Schutzkolloide werden vorzugsweise in einer Menge von 1 bis 10 Gew.-%, besonders bevorzugt 1 bis 6 Gew.-%, jeweils bezogen auf das Gesamtgewicht der Monomere, bei der Polymerisation zugesetzt. Besonders bevorzugt wird eine Mischung aus den genannten Emulgatoren und Schutzkolloiden eingesetzt; ganz besonders bevorzugt eine Mischung aus mindestens einem nichtionischen Emulgator, mindestens einem anionischen Emulgator und mindestens einem Schutzkolloid, jeweils in den obengenannten Mengen.

Die Polymerisation wird in mindestens zwei hintereinander geschalteten Druckreaktoren durchgeführt und anschließend in mindestens einem Niederdruckreaktor weitergeführt. Als Druckreaktoren und Niederdruckreaktoren können die herkömmlichen, entsprechend dimensionierten Stahlreaktoren mit Rühreinrichtung, Heiz-/Kühlsystem sowie Leitungen zur Zuführung der Edukte bzw. Abführung der Produkte eingesetzt werden. Die bevorzugte Anlagenkonfiguration besteht aus zwei hintereinander geschalteten Druckreaktoren und einem oder zwei anschließenden Niederdruckreaktoren. Werden mehrere Niederdruckreaktoren eingesetzt, können diese sowohl wechselweise (parallel) als auch hintereinander (in Reihe) betrieben werden. Höhere Kaskaden mit mehr als zwei Druckreaktoren können eingesetzt werden, sind aber aufgrund der damit verbundenen stark ansteigenden Komplexität der Anlage nicht immer wünschenswert.

Der Prozess wird so geführt, dass in allen Druckreaktoren die Summe der eintretenden Masseströme gleich der Summe der austretenden Masseströme ist. Die Niederdruckreaktoren werden bevorzugt nebeneinander betreiben und wechselweise benutzt. Der Druck in den hintereinander geschalteten Druckreaktoren wird so eingestellt, dass vom ersten bis zum letzten der hintereinander geschalteten Druckreaktoren ein abnehmender Druckgradient resultiert, der den Massefluss in der Druckreaktorkaskade gewährleistet. Der Massetransport vom letzten Druckreaktor in den dahinter geschalteten Niederdruckreaktor kann mittels druckgeregelter Ventile oder mittels einer Pumpe in dem Maß erfolgen, wie die Masseströme in die vorgeschalteten Druckreaktoren zugeführt werden.

Vor Beginn der Polymerisation werden die Druckreaktoren zu 50 bis 80 % des Volumens mit einer Polymerdispersion befüllt, welche vorzugsweise dem Endprodukt der Polymerisation bezüglich Copolymerzusammensetzung, Art und Menge der oberflächenaktiven Verbindung(en) (Emulgatoren und Schutzkolloide) sowie Teilchengröße und Festgehalt entspricht. Dies kann so erfolgen, dass in den Druckreaktoren diese Dispersion mittels Batch-Polymerisation hergestellt wird, oder die Druckreaktoren mit einer separat hergestellten Dispersion befüllt werden.

Anschließend werden die Druckreaktoren mit Ethylen beaufschlagt. Der Ethylendruck wird so reguliert, dass vom ersten bis zum letzten der hintereinandergeschalteten Druckreaktoren ein abnehmender Druckgradient resultiert. Die Druckreaktoren werden bei einer Temperatur von 50°C bis 90°C und bei einem Druck von 10 bis 90 bar abs. betrieben, bevorzugt bei einem Druck p1 von vorzugsweise 30 bis 80 bar abs. im ersten Druckreaktor und bei einem Druck p2 von vorzugsweise 10 bis 40 bar abs. im letzten Druckreaktor, mit der Maßgabe, dass p1 > p2 ist. Vorzugsweise beträgt die Druckdifferenz zwischen zwei hintereinander geschalteten Druckreaktoren 2 bis 40 bar.

50 bis 100 Gew.-%, bevorzugt mehr als 70 Gew.-%, bezogen auf das Gesamtgewicht aller Monomere A), werden im ersten Druckreaktor zudosiert und der Rest in die darauf folgenden Druckreaktoren zudosiert. Monomer B), Ethylen, wird zu mindestens 50 Gew.-% im ersten Druckreaktor vorgelegt und der Rest in den darauf folgenden Druckreaktoren zudosiert. Die Dosierung der funktionalisierten Monomere C) kann so erfolgen, dass diese teilweise oder ganz im ersten Druckreaktor oder teilweise oder ganz in einem der weiteren Druckreaktoren erfolgt. Ein Teil der Monomere C) kann auch erst im Niederdruckreaktor zudosiert werden. Werden als Monomere C) ethylenisch ungesättigte epoxidgruppenhaltige Verbindungen in Kombination mit ethylenisch ungesättigten, hydrolysierbaren Siliciumverbindungen copolymerisiert, werden diese vorzugsweise getrennt voneinander zudosiert. Besonders bevorzugt so, dass eine der Komponenten in den ersten Druckreaktor zudosiert wird und die andere in einen der nachfolgenden Druckreaktoren oder zumindest teilweise erst in den Niederdruckreaktor zudosiert wird. Die Zugabe der genannten Hilfsmonomere D) kann ganz oder teilweise sowohl im ersten als auch einem der darauffolgenden Druckreaktoren oder im Niederdruckreaktor erfolgen. Vorzugsweise werden die Hilfsmonomere D) vollständig in den ersten Druckreaktor zudosiert.

Der Anteil an Emulgatoren kann sowohl vollständig im ersten Druckreaktor dosiert werden, als auch teilweise im ersten Druckreaktor dosiert und der Rest in weiteren Druckreaktoren und/oder den anschließenden Niederdruckreaktoren zudosiert werden. Dabei werden mindestens 80 Gew.-% des Emulgator-Anteils im ersten Druckreaktor vorgelegt oder zudosiert. Besonders bevorzugt wird der gesamte Emulgator-Anteil im ersten Druckreaktor zudosiert. Falls Schutzkolloid eingesetzt wird, wird dieses vorzugsweise im Gemisch mit den Emulgatoren zudosiert. Das Schutzkolloid kann dabei nur in den ersten Druckreaktor zudosiert werden, oder auf die Druckreaktoren und Niederdruckreaktoren verteilt zudosiert werden. Besonders bevorzugt wird die Gesamtmenge an Emulgator und gegebenenfalls Schutzkolloid im ersten Druckreaktor zudosiert.

Die Polymerisation wird mit einem Redoxsystem aus Oxidations- und Reduktionskomponente initiiert, wobei beide Komponenten in alle Druckreaktoren dosiert werden. Der Monomerumsatz wird mit der Initiatordosierung gesteuert. Die Initiatoren werden insgesamt so zudosiert, dass eine kontinuierliche Polymerisation gewährleistet ist, und die Polymerisation im ersten Druckreaktor bis zu einem Umsatz von mindestens 30 Gew.-% und im letzten Druckreaktor von mindestens 90 Gew.-% geführt wird, jeweils bezogen auf das Gesamtgewicht der im Verfahren eingesetzten Monomere.

Insgesamt werden die Dosierraten der Edukte so eingestellt, dass mittlere Verweilzeiten in der Druckreaktorkaskade von vorzugsweise insgesamt 60 bis 240 Minuten resultieren.

Nach Abschluss der Polymerisation in der Druckreaktorkaskade wird zur Restmonomerentfernung in Anwendung bekannter Methoden im Niederdruckreaktor nachpolymerisiert, im allgemeinen durch mit Redoxkatalysator initiierter Nachpolymerisation. Im Niederdruckreaktor wird vorzugsweise bei Atmosphärendruck oder darunter, das heißt bei einem Druck von ≤ 1 bar abs und bei einer Temperatur von 30°C bis 60°C auspolymerisiert. Die Polymerisation wird vorzugsweise bis zu einem Umsatz von mindestens 99 Gew. -%, bezogen auf das Gesamtgewicht der im Verfahren eingesetzten Monomere, besonders bevorzugt bis zu einem Gehalt an freiem Monomer von ≤ 1000 ppm fortgesetzt. In den Niederdruckreaktoren werden beide Initiatorkomponenten im nötigen Maße für die Endkonfektionierung zugegeben.

Flüchtige Restmonomere können anschließend mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew. -%, vorzugsweise von 50 bis 60 Gew.-%.

Die wässrigen Polymerdispersionen können in den dafür typischen Anwendungsbereichen eingesetzt werden, beispielsweise als Bindemittel für Beschichtungsstoffe und Klebemittel, Fliesenklebern und Vollwärmeschutzklebemitteln. Vorzugsweise in Kunststoffdispersionsfarben, als Fassadenfarbe oder Innenfarbe, und in Kunststoffdispersionsputzen.

Die Rezepturen für Kunststoffdispersionsfarben und Kunststoffdispersionsputzen sind dem Fachmann bekannt, und enthalten im allgemeinen 5 bis 50 Gew.-% des wässrigen polymeren Bindemittels, 5 bis 35 Gew. -% Wasser, 5 bis 80 Gew.-% Füllstoff, 5 bis 30 Gew.-% Pigmente sowie 0,1 bis 10 Gew. -% weitere Zusatzstoffe, wobei sich die Angaben in Gew.-% in der Rezeptur auf 100 Gew.-% aufaddieren.

Beispiele für einsetzbare Füllstoffe sind Carbonate wie Calciumcarbonat in Form von Calcit, Kreide und Marmor, sowie Magnesiumcalciumcarbonat in Form von Dolomit. Weitere Beispiele sind Silikate, wie Magnesiumsilikat in Form von Talkum, oder Aluminiumsilikate wie Lehm und Tone, Quarzmehl, Quarzsand, hochdisperse Kieselsäure und Feldspat. Geeignet sind auch Faserfüllstoffe. In der Praxis werden häufig Gemische verschiedener Füllstoffe eingesetzt. Kunststoffputze enthalten im allgemeinen grobkörnigere Füllstoffe als Dispersionsfarben. Die Körnung liegt dabei oftmals zwischen 0,2 und 5,0 mm. Ansonsten können Kunststoffputze die selben Zusatzstoffe wie Dispersionsfarben enthalten.

Geeignete Pigmente sind beispielsweise Titandioxid, Zinkoxid, Eisenoxide, Ruß als anorganische Pigmente, sowie die gebräuchlichen organischen Pigmente. Beispiele für weitere Zusatzstoffe sind Netzmittel in Anteilen von im allgemeinen 0,1 bis 0,5 Gew. -%, bezogen auf das Gesamtgewicht der Rezeptur. Beispiele hierfür sind Natrium- und Kaliumpolyphosphate, Polyacrylsäuren und deren Salze. Als Zusatzstoffe sind auch Verdickungsmittel zu nennen, welche im allgemeinen in einer Menge von 0,01 bis 2,0 Gew.-%, bezogen auf das Gesamtgewicht der Rezeptur, eingesetzt werden. Gebräuchliche Verdickungsmittel sind Celluloseether, Stärken, oder Bentonit als Beispiel für ein anorganisches Verdickungsmittel. Weitere Zusatzstoffe sind Konservierungsmittel, Entschäumer, Gefrierschutzmittel.

Zur Herstellung der Klebe- und Beschichtungsmittel wird die Polymerdispersion mit den weiteren Rezepturbestandteilen, Füllstoff und weiteren Zuschlägen in geeigneten Mischern gemischt und homogenisiert. Bei der Herstellung von pastösen Massen wird häufig zunächst der Wasseranteil vorgelegt, die Dispersion zugegeben und abschließend die Feststoffe eingerührt.

Die Pigment-Volumen-Konzentration (PVK) von pigmenthaltigen Beschichtungsstoffen wie Kunststoffdispersionsfarben liegt im allgemeinen im Bereich von 10 bis 90 % und errechnet sich nach folgender Formel: PVK (%) = (V_{P+F} x 100)/(V_{P+F} + V_{B}) mit V_{P+F} = Summe aus Volumen Pigment und Füllstoff, V_{B} = Volumen Bindemittel.

Bei einer PVK ≥ 50 % spricht man von hochgefüllten Beschichtungsstoffen.

Die mit dem erfindungsgemäßen Verfahren erhaltenen Polymerdispersionen eignen sich als Bindemittel in konventionellen Rezepturen für Dispersionsfarben. Bei der Copolymerisation von funktionellen Comonomeren C) werden funktionalisierte Polymerisate erhalten, welche sich durch eine hohe Nassabriebsbeständigkeit, selbst in hoch gefüllten, überkritisch formulierten Zusammensetzungen, dass heißt, in Beschichtungsstoffen mit einer hohen Pigmentvolumenkonzentration (PVK) ≥ 50, bevorzugt 60 bis 85 %, auszeichnen. Besonders vorteilhaft sind die funktionalisierten Copolymerisate als Bindemittel in Beschichtungsstoffrezepturen für emissionsarme, hoch gefüllte Innenfarben. Besonders vorteilhaft ist eine Partikelgröße der dispergierten Polymerpartikel mit einem gewichtsmittleren Median von < 800 nm, die durch statische Lichtstreumessung bestimmt wird.

Die nachfolgenden Beispiele dienen der weiteren Erläuterung der Erfindung:

### Vergleichsbeispiel 1:

In einem Druckreaktor R1 (Volumen: 18 1) wurden 11 kg einer wässrigen Dispersion eines Copolymerisats der Zusammensetzung 85 Gew.-% Vinylacetat und 15 Gew.-% Ethylen, welche mit 7 Gew.-%, bezogen auf das copolymerisat, eines Polyvinylalkohols, mit einer Viskosität nach Höppler in einer 4 Gew.-%-igen Lösung von 4 mPas, und einem Hydrolysegrad von 88 Mol-%, stabilisiert wurde, vorgelegt. Zusätzlich wurden 1850 g Vinylacetat und 720 g einer 20 Gew.-%-igen, wässrigen Lösung eines Polyvinylalkohols, mit einer Viskosität nach Höppler in einer 4 Gew.-%-igen Lösung von 4 mPas, und einem Hydrolysegrad von 88 Mol-% vorgelegt. Der Druckreaktor R1 war mit einem weiteren Druckreaktor R2 gleicher Größe verbunden, der mit 17 kg der gleichen wie in Druckreaktor R1 vorgelegten Dispersion befüllt wurde. Beide Druckreaktoren wurden mit Ethylen beaufschlagt, wobei der Druck im Druckreaktor R1 70 bar betrug und im Druckreaktor R2 35 bar. Treibende Kraft für den Massefluss war somit die Druckdifferenz zwischen beiden Druckreaktoren. Aus dem zweiten Druckreaktor R2 wurde die Dispersion mittels einer Pumpe in der Menge abgenommen, wie die gesamten Stoffströme über die Dosierungen in die beiden Druckreaktoren zugeführt wurden. Beide Druckreaktoren wurden auf eine Temperatur von 65°C aufgeheizt und die Reaktion durch Start der Initiatordosierungen Kaliumpersulfat (3 Gew.-% in Wasser) und Brüggolit (1,5 Gew.-% in Wasser) gestartet.

Bei Reaktionsbeginn, erkennbar an einem Temperaturanstieg, wurden weitere Dosierungen im Druckreaktor R1 gestartet: 3600 g/h Vinylacetat, 4320 g/h einer 6,6 Gew.-%-igen wässrigen Polyvinylalkohollösung, mit einer Viskosität nach Höppler in einer 4 Gew.-%-igen Lösung von 4 mPas, und einem Hydrolysegrad von 88 Mol-%. Ethylen wurde mit einer Rate von 1150 g/h bei 70 bar Druck im Druckreaktor R1 nachdosiert. Die Dispersion wurde aus dem Druckreaktor R2 in einen sich anschließenden Niederdruckreaktor überführt und dort bei Atmosphärendruck (1 bar abs) und einer Temperatur von 60°C mit 20 ml/h Tert-Butylhydroperoxid (10 Gew.-% in Wasser) und 20 ml/h Brüggolit (10 Gew.-% in Wasser) nachpolymerisiert.

Die Polymerisation wurde über eine Dauer von 24 Stunden durchgeführt.

Die erhaltene Dispersion hatte einen Feststoffgehalt von 50,0 Gew.-%, eine Viskosität von 130 mPas (Brookfield, 20, 23°C) und eine Glasübergangstemperatur von 6,0°C. Der Median der gewichtsmittleren Partikelgrößenverteilung Dw der Dispersion lag bei 1160 nm und war über die Dauer der Reaktion stabil. Der Umsatz, jeweils bezogen auf das Gesamtgewicht der im Verfahren eingesetzten Monomere, betrug im Druckreaktor R1 63,7 Gew.-%, im Druckreaktor R2 98,2 Gew. -%. Der Restmonomergehalt im Niederdruckreaktor betrug 300 ppm.

### Beispiel 2:

In einem Druckreaktor R1 (Volumen: 18 1) wurden 11 kg einer wässrigen Dispersion eines Copolymerisats der Zusammensetzung 87 Gew.-% Vinylacetat und 13 Gew.-% Ethylen vorgelegt, welche mit 5,5 Gew.-%, bezogen auf das Copolymerisat, einer EmulgatorMischung stabilisiert war. Die Emulgatormischung war wie folgt zusammengesetzt: 9 Gew.-%, bezogen auf das Gesamtgewicht der Emulgatoren eines Alkansulfonat-Natrium-Salzes (Mersolat), 12 Gew.-%, bezogen auf das Gesamtgewicht der Emulgatoren, eines Dodecylbenzolsulfonsäure-Natrium-Salz (Melon) und 79 Gew.-%, bezogen auf das Gesamtgewicht der Emulgatoren, eines Iso-Tridecylalkoholpolyglykolethers mit einem Ethoxylierungsgrad von 15 (Genapol X150). Zusätzlich wurden 600 g Ethylen, 3000 g Vinylacetat sowie 3820 g einer wässrigen Emulgatormischung, bestehend aus 231 g Iso-Tridecylalkoholpolyglykolether mit einem Ethoxylierungsgrad von 15 (Genapol X150), 26 g eines Alkansulfonat-Natrium-Salzes (Mersolat), 35 g Dodecylbenzolsulfonsäure-Natrium-Salz (Melon), 18 g Vinylsulfonat, 17 g Natriumacetat und der restlichen Menge (3493 g) an Wasser, vorgelegt. Der Druckreaktor R1 war mit einem weiteren Druckreaktor R2 gleicher Größe verbunden, wobei Druckreaktor R2 mit 17 kg der gleichen wie in Druckreaktor R1 vorgelegten Dispersion befüllt wurde. Beide Druckreaktoren wurden mit Ethylen beaufschlagt, wobei der Druck im Druckreaktor R1 70 bar betrug und im Druckreaktor R2 35 bar, und auf eine Temperatur von 70°C gebracht und die Reaktion durch Dosierung eines Redoxinitiatorsystems aus 100 g/h einer Ammoniumpersulfatlösung (5 Gew.-% in Wasser) und 100 g/h einer Natriumsulfitlösung (4,2 Gew.-% in Wasser) in Druckreaktor R1 und 250 g/h Ammoniumpersulfatlösung (5 Gew.-% in Wasser) und 350 g/h Natriumsulfitlösung (4,2 Gew.-% in Wasser) in Druckreaktor R2 gestartet. Bei Reaktionsbeginn, erkennbar an einem Temperaturanstieg, wurden weitere Dosierungen im Druckreaktor R1 gestartet: 3000 g/h Vinylacetat, 3820 g/h der Emulgatormischung mit der für die Vorlage beschriebenen Zusammensetzung sowie 600 g/h Ethylen. In den Druckreaktor R2 wurde zusätzlich noch 1650 g/h Vinylacetat dosiert. Die Dispersion wurde aus dem Druckreaktor R2 in einen sich anschließenden Niederdruckreaktor überführt und dort mit Natriumsulfit-Lösung (4,2 Gew.-% in Wasser, Dosierrate 340 g/h) und Tert-Butylhydroperoxid-Lösung (10 Gew.-% in Wasser, 130 g/h) bei einer Temperatur von 60°C nachpolymerisiert. Die Polymerisation wurde über eine Dauer von 24 Stunden durchgeführt.

Die erhaltene Dispersion hatte einen Feststoffgehalt von 57,5 Gew.-%, eine Viskosität von 40 mPas (Brookfield, 20, 23°C) und eine Glasübergangstemperatur von 3,4°C. Der Median der gewichtsmittleren Partikelgrößenverteilung Dw der Dispersion lag bei 780 nm und war über die Dauer der Reaktion stabil. Der Umsatz, jeweils bezogen auf die Gesamtmenge der im Verfahren eingesetzten Monomere, betrug im Druckreaktor R1 67,3 Gew.-%, im Druckreaktor R2 96,9 Gew.-%. Der Restmonomergehalt im Niederdruckreaktor betrug 700 ppm.

### Beispiel 3:

Die Polymerisation erfolgte in gleicher Weise wie in Beispiel 2 beschrieben, mit dem Unterschied, dass den 3820 g der Emulgatormischung in Vorlage und Dosierung, bestehend aus 231 g Iso-Tridecylalkoholpolyglykolether mit einem Ethoxylierungsgrad von 15 (Genapol X150), 26 g Alkansulfonat-Natrium-Salze (Mersolat), 35 g Dodecylbenzolsulfonsäure-Natrium-Salz (Melon), 18 g Vinylsulfonat, 17 g Natriumacetat und 3493 g Wasser noch jeweils 63 g Polyvinylalkohol mit einer Höpplerviskosität von 25 mPas und einem Hydrolysegrad von 88 Mol-% (in 4 Gew.-%-iger wässriger Lösung) zugegeben wurde. Die Polymerisation wurde über eine Dauer von 24 Stunden durchgeführt.

Die erhaltene Dispersion hatte einen Feststoffgehalt von 54,5 Gew.-%, eine Viskosität von 1270 mPas (Brookfield, 20, 23°C) und eine Glasübergangstemperatur von 4,0 °C. Der Median der gewichtsmittleren Partikelgrößenverteilung Dw der Dispersion lag bei 790 nm und war über die Dauer der Reaktion stabil. Der Umsatz, jeweils bezogen auf das Gesamtgewicht der im Verfahren eingesetzten Monomere, betrug im Druckreaktor R1 60,0 Gew.-%, im Druckreaktor R2 97,4 Gew.-%. Der Restmonomergehalt im Niederdruckreaktor betrug 400 ppm.

### Vergleichsbeispiel 4:

Die Polymerisation erfolgte in gleicher Weise wie in Beispiel 3 beschrieben, mit dem Unterschied, dass die Emulgatormischung zu 79 Gew.-% dem Reaktor R1 zugeführt wurde und zu 21 Gew.-% kontinuierlich dem Reaktor R2 zugeführt wurden. Die Polymerisation wurde über eine Dauer von 24 Stunden durchgeführt.

Die erhaltene Dispersion hatte einen Feststoffgehalt von 56 Gew.-%, eine Viskosität von 1270 mPas (Brookfield, 20, 23°C), eine Glasübergangstemperatur von 4,7 °C. Der Median der gewichtsmittleren Partikelgrößenverteilung Dw der Dispersion lag bei 1000 nm (Oberfläche: 8,7 m²/g) und war über die Dauer der Reaktion stabil. Der Umsatz, jeweils bezogen auf das Gesamtgewicht der im Verfahren eingesetzten Monomere, betrug im Druckreaktor R1 64,5 Gew.-%, im Druckreaktor R2 98,2 Gew.-%. Der Restmonomergehalt im Niederdruckreaktor betrug 450 ppm.

### Vergleichsbeispiel 5:

Die Polymerisation erfolgte in gleicher Weise wie in Beispiel 4 beschrieben, mit dem Unterschied, dass die Anteile an Alkansulfonat-Natrium-Salz (Mersolat) und Dodecylbenzolsulfonsäure-Natrium-Salz (Melon) in der Emulgatordosierung auf 70 g Mersolat und 90 g Melon in Vorlage und Dosierung erhöht wurden, und der Anteil des Iso-Tridecylalkohol-polyglykolethers mit einem Ethoxylierungsgrad von 15 (Genapol X150) auf 130 g in Vorlage und Dosierung reduziert wurde. Der Gewichtsanteil an ionischen Emulgatoren lag somit bei 55 Gew.-%, bezogen auf das Gesamtgewicht an Emulgator. Die Polymerisation wurde über eine Dauer von 24 Stunden durchgeführt.

Die erhaltene Dispersion hatte einen Feststoffgehalt von 57,2 Gew.-%, eine Viskosität von 790 mPas (Brookfield, 20, 23°C) und eine Glasübergangstemperatur von 6,9°C. Der Median der gewichtsmittleren Partikelgrößenverteilung Dw der Dispersion lag bei 1010 nm und war über die Dauer der Reaktion stabil. Der Umsatz, jeweils bezogen auf das Gesamtgewicht der im Verfahren eingesetzten Monomere, betrug im Druckreaktor R1 70,9 Gew.-%, im Druckreaktor R2 98,4 Gew.-%. Der Restmonomergehalt im Niederdruckreaktor betrug 370 ppm.

### Vergleichsbeispiel 6:

In einem Druckreaktor R1 (Volumen: 18 1) wurden 11 kg einer wässrigen Dispersion eines Copolymerisats der Zusammensetzung 85 Gew.-% Vinylacetat, 13 Gew.-% Ethylen, 1,0 Gew.-% Glycidylmethacrylat und 1,0 Gew.-% Vinyltrimethoxysilan, welche mit 5,5 Gew.-%, bezogen auf das Copolymerisat, einer Mischung von 9 Gew.-%, bezogen auf das Gesamtgewicht der Emulgatoren, eines anionischen Alkansulfonat-Natrium-Salzes (Mersolat) und 12 Gew.-%, bezogen auf das Gesamtgewicht der Emulgatoren, eines anionischen Dodecylbenzolsulfonsäure-Natrium-Salzes (Melon) und 79 Gew.-%, bezogen auf das Gesamtgewicht der Emulgatoren, eines nichtionischen Iso-Tridecylalkoholpolyglykolethers mit einem Ethoxylierungsgrad von 15 (Genapol X150) stabilisiert war und zusätzlich noch mit 1, 2 Gew.-%, bezogen auf das Copolymerisat, eines Polyvinylalkohols mit einer Viskosität nach Höppler in einer 4 Gew.-%-igen wässrigen Lösung von 25 mPas und einem Hydrolysegrad von 88 Mol-%, stabilisiert war, vorgelegt. Zusätzlich wurden 600 g Ethylen, 3000 g einer Mischung aus 2964 g Vinylacetat und 36 g Vinyltrimethoxysilan vorgelegt, sowie 3880 g einer wässrigen Emulgatormischung, bestehend aus 231 g Iso-Tridecylalkoholpolyglykolethers mit einem Ethoxylierungsgrad von 15 (Genapol X150), 26 g eines Alkansulfonat-Natrium-Salzes (Mersolat), 35 g Dodecylbenzolsulfonsäure-Natrium-Salz (Melon), 63 g eines Polyvinylalkohols mit einer Höpplerviskosität von 25 mPas, (in 4 Gew.-%-iger wässriger Lösung) und einem Hydrolysegrad von 88 Mol-%, 18 g Vinylsulfonat, 17 g Natriumacetat und der restlichen Menge an Wasser (3490 g), vorgelegt. Der Druckreaktor R1 war mit einem weiteren Druckreaktor R2 gleicher Größe verbunden, wobei Druckreaktor R2 mit 17 kg der gleichen, wie in Druckreaktor R1 vorgelegten, Dispersion befüllt wurde. Beide Druckreaktoren wurden mit Ethylen beaufschlagt, wobei der Druck im Druckreaktor R1 70 bar betrug und im Druckreaktor R2 35 bar. Beide Druckreaktoren wurden auf eine Temperatur von 70°C gebracht und die Reaktion durch Start der Dosierung eines Redoxinitiatorsystems aus 200 g/h einer Ammoniumpersulfatlösung (5 Gew.-% in Wasser) und 200 g/h einer Natriumsulfitlösung (4,2 Gew.-% in Wasser) in Druckreaktor R1 und 315 g/h Ammoniumpersulfatlösung (5 Gew.-% in Wasser) und 440 g/h Natriumsulfitlösung (4,2 Gew.-% in Wasser) in Druckreaktor R2 gestartet. Bei Reaktionsbeginn, erkennbar an einem Temperaturanstieg, wurden weitere Dosierungen im Druckreaktor R1 gestartet: 3000 g/h eines Vinylacetat/Vinyltrimethoxysilan-Gemisches aus 2964 g Vinylacetat und 36 g Vinyltrimethoxysilan, 3000 g/h eines Emulgatorgemisches der für die Vorlage beschriebenen Zusammensetzung sowie 600 g/h Ethylen. In den Druckreaktor R2 wurden zusätzlich folgende Dosierungen gestartet: 1650 g/h eines Vinylacetat/Glycidylmethacrylat-Gemigches aus 1595 g Vinylacetat und 55 g Glycidylmethacrylat und 880 g/h eines Emulgatorgemisches der für die Vorlage beschriebenen Zusammensetzung. Damit wurden 22 Gew.-% aller Emulgatoren in den Druckreaktor R2 dosiert. Treibende Kraft für den Massefluss war somit die Druckdifferenz zwischen beiden Druckreaktoren. Aus dem zweiten Druckreaktor R2 wurde die Dispersion mittels einer Pumpe in der Menge abgenommen, wie die gesamten Stoffströme über die Dosierungen in die beiden Druckreaktoren zugeführt wurden. Die Dispersion wurde aus dem Druckreaktor R2 in einen sich anschließenden Niederdruckreaktor (1 bar abs) überführt und bei einer Temperatur von 60°C mit Natriumsulfit (4,2 Gew.-% in Wasser, 340 g/h) und Tert-Butylhydroperoxid (10 Gew.-% in Wasser, 130 g/h) nachpolymerisiert.

Die Polymerisation wurde über eine Dauer von 24 Stunden durchgeführt.

Die erhaltene Dispersion hatte einen Feststoffgehalt von 55,7 Gew.-%, eine Viskosität von 1200 mPas (Brookfield, 20, 23°C) und eine Glasübergangstemperatur von 6,1°C. Der Median der gewichtsmittleren Partikelgrößenverteilung Dw der Dispersion lag bei 1630 nm und war über die Dauer der Reaktion stabil. Der Umsatz, jeweils bezogen auf das Gesamtgewicht der im Verfahren eingesetzten Monomere, betrug im Druckreaktor R1 55,8 Gew.-%, im Druckreaktor R2 95,6 Gew.-%. Der Restmonomergehalt im Niederdruckreaktor betrug 710 ppm.

### Beispiel 7 :

Die Polymerisation erfolgte in gleicher Weise wie in Vergleichsbeispiel 6 beschrieben, mit dem Unterschied, dass die Emulgatordosierung der beschriebenen Zusammensetzung für den Druckreaktor 2, bestehend aus Iso-Tridecylalkoholpolyglykolether mit einem Ethoxylierungsgrad von 15 (Genapol X150), Alkansulfonat-Natrium-Salze (Mersolat), Dodecylbenzolsulfonsäure-Natrium-Salz (Melon), Polyvinylalkohol mit einer Höpplerviskosität von 25 mPas (in 4 Gew.-%-iger wässriger Lösung) und einem Hydrolysegrad von 88 Mol-%, Vinylsulfonat, Natriumacetat und Wasser ausschließlich dem Druckreaktor 1 kontinuierlich zugeführt wurde. Die Polymerisation wurde über eine Dauer von 24 Stunden durchgeführt.

Die erhaltene Dispersion hatte einen Feststoffgehalt von 55,1 Gew.-%, eine Viskosität von 1580 mPas (Brookfield, 20, 23°C), eine Glasübergangstemperatur von 6 °C. Der Median der gewichtsmittleren Partikelgrößenverteilung Dw der Dispersion lag bei 600 nm (Oberfläche: 11,3 m²/g) und war über die Dauer der Reaktion stabil. Der Umsatz, jeweils bezogen auf das Gesamtgewicht der im Verfahren eingesetzten Monomere, betrug im Druckreaktor R1 54,0 Gew.-%, im Druckreaktor R2 91,3 Gew.-%. Der Restmonomergehalt im Niederdruckreaktor betrug 870 ppm.

### Beispiel 8:

Die Polymerisation erfolgte in gleicher Weise wie in Beispiel 7 beschrieben, mit dem Unterschied, dass die Anteile an Alkansulfonat-Natrium-Salz (Mersolat) und Dodecylbenzolsulfonsäure-Natrium-Salz (Melon) in der Emulgatordosierung auf 35 g Mersolat und 49 g Melon erhöht wurden und der Anteil des Iso-Tridecyl-alkoholpolyglykolethers mit einem Ethoxylierungsgrad von 15 (Genapol X150) auf 200 g reduziert wurde. Der Gewichtsanteil an ionischen Emulgatoren lag somit bei 30 Gew.-%, bezogen auf das Gesamtgewicht an Emulgator. Die Polymerisation wurde über eine Dauer von 24 Stunden durchgeführt.

Die erhaltene Dispersion hatte einen Feststoffgehalt von 55,7 Gew.-%, eine Viskosität von 1260 mPas (Brookfield, 20, 23°C) und eine Glasübergangstemperatur von 6,0°C. Der Median der gewichtsmittleren Partikelgrößenverteilung Dw der Dispersion lag bei 660 nm und war über die Dauer der Reaktion stabil. Der Umsatz, jeweils bezogen auf das Gesamtgewicht der im Verfahren eingesetzten Monomere, betrug im Druckreaktor R1 60,4 Gew.-%, im Druckreaktor R2 97,3 Gew.-%. Der Restmonomergehalt im Niederdruckreaktor betrug 720 ppm.

### Vergleichsbeispiel 9:

Die Polymerisation erfolgt in gleicher Weise wie in Beispiel 7 beschrieben, mit dem Unterschied, dass die Anteile an Alkansulfonat-Natrium-Salze (Mersolat) und Dodecylbenzolsulfonsäure-Natrium-Salz (Melon) in der Emulgatordosierung auf 70 g Mersolat und 90 g Melon erhöht wurden und der Anteil des Iso-Tridecylalkoholpolyglykolethers mit einem Ethoxylierungsgrad von 15 (Genapol X150) auf 130 g reduziert wurde. Der Gewichtsanteil an ionischen Emulgatoren lag somit bei 55 Gew.-%, bezogen auf das Gesamtgewicht der Emulgatoren. Die Polymerisation wurde über eine Dauer von 24 Stunden durchgeführt.

Die erhaltene Dispersion hatte einen Feststoffgehalt von 55,9 Gew.-%, eine Viskosität von 660 mPas (Brookfield, 20, 23°C) und eine Glasübergangstemperatur von 7,0°C. Der Median der gewichtsmittleren Partikelgrößenverteilung Dw der Dispersion lag bei 1120 nm und war über die Dauer der Reaktion stabil. Der Umsatz, jeweils bezogen auf das Gesamtgewicht der im Verfahren eingesetzten Monomere, betrug im Druckreaktor R1 59,1 Gew.-%, im Druckreaktor R2 96,0 Gew.-%, Der Restmonomergehalt im Niederdruckreaktor betrug 860 ppm.

### Beispiel 1.0:

Die Polymerisation erfolgte in gleicher Weise wie in Vergleichsbeispiel 6 beschrieben, mit dem Unterschied, dass die Emulgatordosierung in den Druckreaktor R2 von 880 g/h der dort beschriebenen Emulgatormischung auf 440 g/h reduziert wurde, und die restlichen 440 g/h zusammen mit der Dosierung von 3000 g/h in den Reaktor R1 dosiert wurden. Die Polymerisation wurde über eine Dauer von 24 Stunden durchgeführt. Damit betrug der Anteil der in den Druckreaktor dosierten Emulgatoren 11 Gew.-%, bezogen auf das Gesamtgewicht der Emulgatoren.

Die erhaltene Dispersion hatte einen Feststoffgehalt von 56,5 Gew.-%, eine Viskosität von 1420 mPas (Brookfield, 20, 23°C) und eine Glasübergangstemperatur von 5,3°C. Der Median der gewichtsmittleren Partikelgrößenverteilung Dw der Dispersion lag bei 660 nm und war über die Dauer der Reaktion stabil. Der Umsatz, jeweils bezogen auf das Gesamtgewicht der im Verfahren eingesetzten Monomere, betrug im Druckreaktor R1 61,6 Gew.-%, im Druckreaktor R2 93,6 Gew.-%, Der Restmonomergehalt im Niederdruckreaktor betrug 880 ppm.

### Beispiel 11:

Die Polymerisation erfolgte in gleicher Weise wie in Beispiel 7 beschrieben, mit dem Unterschied, dass in den Emulgatormischungen, welche in die Druckreaktoren R1 und R2 dosiert wurden, auf den Polyvinylalkohol-Anteil verzichtet worden war. Die Polymerisation wurde über eine Dauer von 24 Stunden durchgeführt.

Die erhaltene Dispersion hatte einen Feststoffgehalt von 56,1 Gew.-%, eine Viskosität von 45 mPas (Brookfield, 20, 23°C) und eine Glasübergangstemperatur von 6,0°C. Der Median der gewichtsmittleren Partikelgrößenverteilung Dw der Dispersion lag bei 670 nm und war über die Dauer der Reaktion stabil. Der Umsatz, jeweils bezogen auf das Gesamtgewicht der im Verfahren eingesetzten Monomere, betrug im Druckreaktor R1 63,3 Gew.-%, im Druckreaktor R2 94,0 Gew.-%. Der Restmonomergehalt im Niederdruckreaktor betrug 730 ppm.

### Anwendungstechnische Prüfung:

### Herstellung der Farbrezepturen:

Mit den in den (Vergleichs) Beispielen 1 bis 11 beschriebenen Dispersionen wurden Farben auf Basis unterschiedlicher Rezepturen hergestellt. Rezeptur 1 beschreibt eine konventionelle Rezeptur mit einer PVK von 56 % (Tabelle 1). Rezeptur 2 beschreibt eine silikatreiche Rezeptur (Silikat/Carbonat = 180/43 Gew.-Teile) mit einer PVK von 60 %, wohingegen Rezeptur 3 eine carbonatreiche Rezeptur (Silikat/Carbonat = 80/260 Gew.-Teile) mit einer PVK von 73 % darstellt (Tabellen 2 und 3).

**Tabelle 1: Farbrezeptur 1**

| Farbrezeptur 1 (FR1) | |
|---|---|
| Bestandteil | Gew.-Anteil |
| Wasser | 285,5 |
| Celluloseether (Natrosol plus 330) | 5 |
| Rheologie-Additiv (Rheolate 208) | 1 |
| Dispergiermittel (Dispex G 40) | 3,5 |
| Entschäumer (Silfoam SD670) | 2 |
| Natriumhydroxid (10% in Wasser) | 1 |
| Konservierungsmittel (Hydorol W) | 2 |
| Titandioxid-Pigment (Kronos 2300) | 220 |
| Calciumcarbonat (Omyalite 90) | 200 |
| Polymerdispersion (55%) | 280 |
| Summe alle Gew.-Teile | 1000 |

**Tabelle 2: Farbrezeptur 2**

| Farbrezeptur 2 (FR2) | |
|---|---|
| Bestandteil | Gew.-Anteil |
| Wasser | 300 |
| Celluloseether (Tylose H 6000 YP) | 6 |
| Dispergiermittel (Dispex N 40) | 5 |
| Dispergiermittel (Calgon N) | 5 |
| Natriumhydroxid (10% in Wasser) | 1 |
| Konservierungsmittel (Hydorol W) | 1 |
| Entschäumer (Agitan 260) | 4 |
| Magnesiumsilikat (Talkum N) | 30 |
| Titandioxid-Pigment (Kronos 2300) | 250 |
| Aluminiumsilikat gefällt (P 820) | 50 |
| Aluminiumsilikat (China-Clay B) | 100 |
| Calciumcarbonat gefällt (Socal P2) | 13 |
| Dolomit (Microdol 1) | 30 |
| Polymerdispersion (55%) | 200 |
| Entschäumer (Agitan 260) | 5 |
| Summe alle Gew.-Teile | 1000 |

**Tabelle 3: Farbrezeptur 3**

| Farbrezeptur 3 (FR3) | |
|---|---|
| Bestandteil | Gew.-Anteil |
| Wasser | 423 |
| Celluloseether (Tylose H 6000 YP) | 6 |
| Dispergiermittel (Dispex N 40) | 5 |
| Dispergiermittel (Calgon N) | 5 |
| Natriumhydroxid (10% in Wasser) | 1 |
| Konservierungsmittel (Hydorol W) | 1 |
| Entschäumer (Agitan 260) | 4 |
| Magnesiumsilikat (Talkum N) | 80 |
| Titandioxid-Pigment (Kronos 2300) | 100 |
| Calciumcarbonat (Omyacarb 2 GU) | 70 |
| Calciumcarbonat (Omyacarb 5 GU) | 70 |
| Calciumcarbonat gefällt (Socal P2) | 70 |
| Dolomit (Microdol 1) | 50 |
| Polymerdispersion (55%) | 110 |
| Entschäumer (Agitan 260) | 5 |
| Summe alle Gew.-Teile | 1000 |

### Bestimmung des Nassabriebs:

Mit allen drei Rezepturen wurde die Nassabriebsbeständigkeit mittels der Vliesmethode (ISO11998) getestet. Dazu wurde die Abtragung der Beschichtung nach 200 Scheuerzyklen über den Masseverlust des Farbfilms bestimmt. Aus der Farbdichte, der gescheuerten Fläche und dem Masseverlust des Farbfilms wurde der Farbabtrag (Nassabrieb) in µm berechnet. Die Ergebnisse sind in den Tabellen 4 und 5 zusammengestellt.

### Bestimmung des Medians der gewichtsmittleren Partikelgrößenverteilung:

Die Bestimmung des Medianwertes der gewichtsmittleren Partikelgrößenverteilung erfolgte durch statische Lichtstreumessung mit dem Partikelgrößenmessgerät LS13320 der Firma BECKMAN COULTER™. Die Probe wird auf eine Konzentration von ca. 2 Gew.-% mit Wasser verdünnt und im PIDS (Polarization Intensity Differential Scattering)-Modus gemessen. Es lassen sich mit dieser Methode Partikelgrößenverteilungen im Bereich von 40 nm bis 2000 pm messen. Die Messzeit pro Probe beträgt ca. 1,5 Minuten.

Der Median der Partikelgrößenverteilung teilt die Verteilung in zwei gleich große Hälften: Je 50 Gew.-% der Partikel der Verteilung liegen oberhalb und unterhalb des Medianwertes.

**Tabelle 4:**

| Median der gewichtsmittleren Partikelgrößenverteilung der Dispersionen aus (Vergleichs)Beispiel 1 bis 5 und Nassabriebsbeständigkeit (NA) der mit Bindemittel gemäß (Vergleichs)beispiele 1 bis 5 hergestellten Farbrezepturen 1 und 2 | | | | | | |
|---|---|---|---|---|---|---|
| Beispiel | Gew.-Anteile VTMS /GMA [%] | Gew.-Anteile PVOH [%] | Gew.-Anteile Emulgator [%] | Median [nm] | NA FR 1 [µm] | NA FR 2 [µm] |
| V1 | 0/0 | 7 | 0 | 1300 | 9,6 | 17,5 |
| 2 | 0/0 | 0 | 5,5^{*)} | 780 | 5,9 | 14,6 |
| 3 | 0/0 | 1,2 | 5,5^{*)} | 790 | 5,8 | 13,8 |
| V4 | 0/0 | 1,2 | 5,5 | 1000 | 6,2 | 15,9 |
| V5 | 0/0 | 1,2 | 5,5^{**)} | 1010 | 9,5 | 17,1 |

**Tabelle 5:**

| Median der gewichtsmittleren Partikelgrößenverteilung der Dispersionen aus (Vergleichs)Beispiel 6 bis 11 und die Nassabriebsbeständigkeit (NA) der mit Bindemittel gemäß (Vergleichs)-beispiele 6 bis 11 hergestellten Farbrezepturen 2 und 3 | | | | | | |
|---|---|---|---|---|---|---|
| Beispiel | Gew.-Anteile VTMS /GMA [%] | Gew.-Anteile PVOH [%] | Gew.-Anteile Emulgator [%] | Median [nm] | NA FR 2 [µm] | NA FR 3 [µm] |
| V6 | 0,7/1,0 | 1,2 | 5,5 | 1630 | 8,8 | 36,9 |
| 7 | 0,7/1,0 | 1,2 | 5,5^{*)} | 600 | 4 | 15,3 |
| 8 | 0,7/1,0 | 1,2 | 5,5^{*)} | 660 | 6,3 | 29,8 |
| V9 | 0,7/1,0 | 1,2 | 5,5^{*)**)} | 1120 | 9,7 | 37,8 |
| 10 | 0,7/1,0 | 1,2 | 5,5^{***)} | 660 | 5,8 | 29,3 |
| 11 | 0,7/1,0 | 0 | 5,5^{*)} | 670 | 6,9 | 18,8 |

| | | | | | | |
|---|---|---|---|---|---|---|
| Erläuterungen zu Tabelle 4 und 5: TMS = Vinyltrimethoxysilan, GMA = Glycidylmethacrylat, PVOH = Polyvinylalkohol, Median = Median der gewichtsmittleren Partikelgrößenverteilung, NA = Nassabrieb, FR = Farbrezeptur *) Dosierung von Emulgator erfolgt ausschließlich in den ersten Reaktor **) Der Anteil an ionischen Emulgatoren, bezogen auf das Gesamtgewicht aller eingesetzten Emulgatoren > 50 Gew.-% ***)Der Anteil an ionischen Emulgatoren, bezogen auf das Gesamtgewicht aller eingesetzten Emulgatoren ist 10 Gew.-% | | | | | | |

### Diskussion der Ergebnisse aus Tabelle 4:

Die Ergebnisse der Beispiele und Vergleichsbeispiele zeigen, dass die Zuführung der oberflächenaktiven Verbindungen und deren Zusammensetzung einen entscheidenden Einfluss auf die Teilchengröße der Polymerpartikel haben. Die Beispiele und Vergleichsbeispiele ohne die Verwendung von Vinyltrimethoxysilan und Glycidylmethacrylat ((Vergleichs) Beispiele 1 bis 5) zeigen eine deutliche Reduzierung der gewichtsmittleren Partikelgrößenverteilung, wenn mindestens 80 Gew.-% der Gesamtmenge aller zugeführten Emulgatoren in den ersten Druckreaktor kontinuierlich dosiert wurden (Bsp. 2 und Bsp. 3). Die Abnahme der Partikelgröße der Polymerdispersion, geht mit einer deutlichen Abnahme des Nassabriebes der Farbrezepturen einher (Bsp. 2 und Bsp. 3). Werden dagegen wie in Vergleichsbeispiel 4 weniger als 80 % des Emulgators in den ersten Druckreaktor zugeführt, wird der Nassabrieb bei gleicher Zusammensetzung der Emulgatormischung deutlich verschlechtert.

Beispiel 3 zeigt im Vergleich zu Beispiel 2 den positiven Effekt der Stabilisatorkombination mit Schutzkolloid.

Die ausschließliche Verwendung von Schutzkolloid, wie in Vergleichsbeispiel 1, bringt dagegen nur unbefriedigende Ergebnisse bezüglich Teilchengröße und Nassabrieb.

Wird wie in Vergleichsbeispiel 5 weniger als 50 Gew.-% nichtionischer Emulgator in der Emulgatormischung eingesetzt, verschlechtern sich Teilchengröße und Nassabrieb ebenfalls.

### Diskussion der Ergebnisse aus Tabelle 5:

Gleiche Effekte lassen sich auch für die funktionalisierten Polymerdispersionen beobachten die unter Verwendung von Vinyltrimethoxysilan und Glycidylmethacrylat kontinuierlich synthetisiert wurden ((Vergleichs)Beispiele 6 bis 10). Die erfindungsgemäße Zuführung der Emulgatoren, wie in Beispiel 7 beschrieben, führte zu einer gewichtsmittleren Partikelgrößenverteilung deutlich unterhalb von 800 nm und einer Reduzierung des Nassabriebes in beiden Farbrezepturen. Im Vergleich dazu führte die Aufteilung der Dosierung der Emulgatoren bzw. Schutzkolloidde mit weniger als 80 Gew.-% im ersten Druckreaktor zu einer deutlichen Verschiebung des Medians der gewichtsmittleren Partikelgrößenverteilung zu Werten oberhalb von 800 nm und einer damit verbundenen Zunahme des Nassabriebs der Farbrezepturen (Vergleichsbeispiel 6).

Ein Optimum an Eigenschaften erhält man, wenn zusätzlich zur Dosierung von mindestens 80 Gew.-% des Emulgators in den ersten Druckreaktor der Anteil an nichtionischen Emulgatoren in der Emulgatordosierung möglichst hoch gewählt wird. Dies zeigt der Vergleich von Beispiel 8 (70 Gew.-% nichtionischer Emulgator) mit Beispiel 7 (79 Gew.-% nichtionischer Emulgator).

Analog zu den Messungen mit nichtfunktionalisierten Copolymerisaten verschlechtern sich Teilchengröße und Nassabrieb bei weniger als 50 Gew.-% nichtionischem Emulgator in der Emulgatormischung (Vergleichsbeispiel 9).

Der Vergleich von Beispiel 11 mit Beispiel 7 zeigt den positiven Einfluß einer Costabilisierung mit Schutzkolloid. Die Werte für den Median und Nassabrieb sind bei Beispiel 11 (ohne Polyvinylalkohol) sehr gut, können aber mittels Costabilisierung mit Polyvinylalkohol, wie in Beispiel 7 erfolgt, noch gesteigert werden.

In Beispiel 10 wurden im Unterschied zu Vergleichsbeispiel 6 mehr als 80 Gew.-% des Emulgators in den ersten Druckreaktor zudosiert. Dies führt zu einer Verbesserung der Werte, aber nicht in dem Maße wie bei ausschließlicher Dosierung des Emulgators in den ersten Druckreaktor (Beispiel 7).

Demnach kann mit dem erfindungsgemäßen Prozess ein Eigenschaftsprofil der Polymerdispersion erzeugt werden, das mit dem der durch die herkömmliche Batch- und Semibatch-Fahrweise erzeugten Dispersionen vergleichbar ist, ebenso hinsichtlich der anwendungstechnischen Eigenschaften der daraus resultierenen Farben.

Der Nassabrieb wird überraschenderweise nicht nur alleine durch Zugabe der vernetzenden Monomeren Vinyltrimethoxysilan und Glycidylmethacrylat beeinflusst, sondern kann ebenso über die Dosier-Mengen der Emulgatoren und gegebenenfalls Schutzkolloide gesteuert werden. Zudem wurde überraschenderweise gefunden, dass der Anteil an ionischem Emulgator nicht > 50 Gew.-% gewählt werden darf, um einen akzeptablen Nassabrieb zu erhalten.

## Patentansprüche

1. Verfahren zur wässrigen, mit einem Retoxsystem aus Oxidations- und Reduktionskomponente radikalisch initiierten, kontinuierlichen Emulsionspolymerisation von A) mindestens einem Vinylester und gegebenenfalls mindestens einem (Meth)acrylsäureester, B) Ethylen, und C) 0 bis 10 Gew.-%, bezogen auf das Gesamtgewicht der Monomere, von einem oder mehreren ethylenisch ungesättigten, funktionalisierten Comonomeren, in Gegenwart von 3,0 bis 12,5 Gew.-%, bezogen auf das Gesamtgewicht der Monomere , von einem oder mehreren Emulgatoren, wobei mindestens 50 Gew.-%, bezogen auf das Gesamtgewicht an Emulgatoren, nichtionische Emulgatoren sind, und 0 bis 10 Gew.-%, bezogen auf das Gesamtgewicht der Monomere , von einem oder mehreren Schutzkolloiden, in einer Rührkesselkaskade mit mindestens zwei hintereinander geschalteten Druckreaktoren und daran anschließend mindestens einem Niederdruckreaktor, wobei gegebenenfalls vor Beginn der Polymerisation die Druckreaktoren zu 50 bis 80% des Volumens mit einer Polymerdispersion befüllt werden, wobei in den Druckreaktoren bei einer Temperatur von 50°C bis 90°C und einem Druck von 10 bis 90 bar abs. polymerisiert wird, und die Polymerisation so geführt wird, dass mindestens 80 Gew.-% des Gesamtgewichts an Emulgatoren im ersten Druckreaktor zudosiert werden, und in den ersten Druckreaktor jeweils mindestens 50 Gew.-% des Gesamtgewichts an Comonomer A) und Ethylen zugegeben werden, in die folgenden Druckreaktoren die verbleibenden Mengen der Monomere A) und Ethylen zugegeben werden, und die Polymerisation im ersten Druckreaktor bis zu einem Monomerumsatz von ≥ 30 Gew.-%, bezogen auf die Gesamtmenge der im Verfahren eingesetzten Monomere, und im letzten Druckreaktor bis zu einem Monomerumsatz von ≥ 90 Gew.-%, bezogen auf das Gesamtgewicht der im Verfahren eingesetzten Monomere, geführt wird, und in dem mindestens einem Niederdruckreaktor bei einer Temperatur von 30°C bis 60°C und einem Druck von höchstens 4 bar abs. auspolymerisiert wird.

2. Verfahren nach Anspruch 1, **dadurch gekennzeichnet, dass** als Comonomere C) ein oder mehrere, aus der Gruppe umfassend ethylenisch ungesättigte, hydrolysierbare Siliciumverbindungen und ethylenisch ungesättigte epoxidgruppenhaltige Verbindungen, copolymerisiert werden.

3. Verfahren nach Anspruch 2, **dadurch gekennzeichnet, dass** 0,05 bis 5 Gew.-% mindestens einer ethylenisch ungesättigten, hydrolysierbaren Siliciumverbindung und/oder 0,1 bis 5 Gew.-% mindestens einer ethylenisch ungesättigten epoxidgruppenhaltigen Verbindung, jeweils bezogen auf das Gesamtgewicht der Monomere, copolymerisiert werden.

4. Verfahren nach Anspruch 2 oder 3, **dadurch gekennzeichnet, dass** als Comonomere C) ein oder mehrere aus der Gruppe umfassend γ-Acryl- und γ-Methacryloxypropyltri(alkoxy)silane, mit C1- bis C12-Alkoxygruppen und gegebenenfalls C1- bis C3-Alkylgruppen, und α-Silane copolymerisiert werden.

5. Verfahren nach Anspruch 2 bis 4, **dadurch gekennzeichnet, dass** als Comonomere C) ein oder mehrere, aus der Gruppe umfassend Glycidylacrylat, Glycidylmethacrylat, Allylglycidether und Vinylglycidether copolymerisiert werden.

6. Verfahren nach Anspruch 1 bis 5, **dadurch gekennzeichnet, dass** zusätzlich zu den Monomeren A) und B) und gegebenenfalls C) noch 0,05 bis 10 Gew.-%, bezogen auf das Gesamtgewicht der Monomere, Hilfsmonomere D) copolymerisiert werden.

7. Verfahren nach Anspruch 6, **dadurch gekennzeichnet, dass** als Hilfsmonomere D) eine oder mehrere Verbindungen copolymerisiert werden, aus der Gruppe umfassend ethylenisch ungesättigte Mono- und Dicarbonsäuren, ethylenisch ungesättigte Carbonsäureamide und -nitrile, ethylenisch ungesättigte Sulfonsäuren und deren Salze.

8. Verfahren nach Anspruch 1 bis 7, **dadurch gekennzeichnet, dass** als Comonomere A) zusätzlich zu Vinylester noch bis zu 20 Gew.-%, bezogen auf das Gesamtgewicht der Monomere, Methacrylsäureester oder Acrylsäureester von unverzweigten oder verzweigten Alkoholen mit 1 bis 15 C-Atomen copolymerisiert werden.

9. Verfahren nach Anspruch 1 bis 8, **dadurch gekennzeichnet, dass** Vinylacetat in einer Menge von 70 bis 90 Gew.-% und Ethylen in einer Menge von 1 bis 30 Gew.-% Ethylen, jeweils bezogen auf das Gesamtgewicht der Monomere, copolymerisiert werden.

10. Verfahren nach Anspruch 1 bis 9, **dadurch gekennzeichnet, dass** Gemische aus einem oder mehreren nichtionischen Emulgatoren und einem oder mehreren anionischen Emulgatoren eingesetzt werden.

11. Verfahren nach Anspruch 10, **dadurch gekennzeichnet, dass** der Anteil der nichtionischen Emulgatoren im Gemisch mindestens 75 Gew.-%, bezogen auf das Gesamtgewicht an nichtionischem und anionischem Emulgator beträgt.

12. Verfahren nach Anspruch 1 bis 11, **dadurch gekennzeichnet, dass** zusätzlich zu den Emulgatoren noch Schutzkolloide als oberflächenaktive Verbindungen eingesetzt werden.

13. Verfahren nach Anspruch 12, **dadurch gekennzeichnet, dass** als Schutzkolloid Polyvinylalkohol eingesetzt wird.

14. Verfahren nach Anspruch 1 bis 13, **dadurch gekennzeichnet, dass** im Niederdruckreaktor bis zu einem Gehalt an freiem Monomer ≤ 1000 ppm auspolymerisiert wird.

15. Verfahren nach Anspruch 1 bis 14, **dadurch gekennzeichnet, dass** im Niederdruckreaktor flüchtige Restmonomere mittels Destillation und gegebenenfalls unter Durchleiten oder Überleiten von inerten Schleppgasen entfernt werden.

16. Verfahren nach Anspruch 1 bis 15, **dadurch gekennzeichnet, dass** die Gesamtmenge an Emulgator und gegebenenfalls Schutzkolloid im ersten Druckreaktor zudosiert wird.

## Claims

1. Process for the aqueous, continuous emulsion polymerization, initiated radically with a redox system composed of oxidizing component and reducing component, of A) at least one vinyl ester and optionally at least one (meth)acrylic ester, B) ethylene, and C) 0% to 10% by weight, based on the total weight of the monomers, of one or more ethylenically unsaturated, functionalized comonomers, in the presence of 3.0% to 12.5% by weight, based on the total weight of the monomers, of one or more emulsifiers, where at least 50% by weight, based on the total weight of emulsifiers, are nonionic emulsifiers, and 0% to 10% by weight, based on the total weight of the monomers, of one or more protective colloids, in a stirred-tank cascade with at least two serial pressure reactors and downstream therefrom at least one low-pressure reactor, where optionally before the polymerization commences the pressure reactors are filled to 50% to 80% of their volume with a polymer dispersion, where polymerization takes place in the pressure reactors at a temperature of 50°C to 90°C under a pressure of 10 to 90 bar abs., and the polymerization is conducted such that at least 80% by weight of the total weight of emulsifiers is metered in the first pressure reactor, and at least 50% by weight each of the total weight of comonomer A) and ethylene is added in the first pressure reactor, the remaining amounts of the monomers A) and ethylene are added in the following pressure reactors, and the polymerization in the first pressure reactor is conducted through to a monomer conversion of ≥ 30% by weight, based on the total amount of the monomers used in the process, and in the last pressure reactor it is conducted through to a monomer conversion of ≥ 90% by weight, based on the total weight of the monomers used in the process, and polymerization to completion takes place in the at least one low-pressure reactor at a temperature of 30°C to 60°C under a pressure of not more than 4 bar abs.

2. Process according to Claim 1, **characterized in that** one or more comonomers C) from the group encompassing ethylenically unsaturated, hydrolyzable silicon compounds and ethylenically unsaturated compounds containing epoxide groups are copolymerized.

3. Process according to Claim 2, **characterized in that** 0.05% to 5% by weight of at least one ethylenically unsaturated, hydrolyzable silicon compound and/or 0.1% to 5% by weight of at least one ethylenically unsaturated compound containing epoxide groups, based in each case on the total weight of the monomers, are copolymerized.

4. Process according to Claim 2 or 3, **characterized in that** one or more comonomers C) from the group encompassing γ-acryloyl- and γ-methacryloyloxypropyltri(alkoxy)silanes, having C1 to C12 alkoxy groups and optionally C1 to C3 alkyl groups, and α-silanes are copolymerized.

5. Process according to Claim 2 to 4, **characterized in that** one or more comonomers C) from the group encompassing glycidyl acrylate, glycidyl methacrylate, allyl glycidyl ether, and vinyl glycidyl ether are copolymerized.

6. Process according to Claim 1 to 5, **characterized in that** further to the monomers A) and B) and optionally C), 0.05% to 10% by weight, based on the total weight of the monomers, of auxiliary monomers D) are copolymerized.

7. Process according to Claim 6, **characterized in that** copolymerized auxiliary monomers D) comprise one or more compounds from the group encompassing ethylenically unsaturated monocarboxylic and dicarboxylic acids, ethylenically unsaturated carboxamides and carbonitriles, ethylenically unsaturated sulfonic acids, and salts thereof.

8. Process according to Claim 1 to 7, **characterized in that** comonomers A) copolymerized comprise, further to vinyl ester, up to 20% by weight, based on the total weight of the monomers, of methacrylic esters or acrylic esters of unbranched or branched alcohols having 1 to 15 C atoms.

9. Process according to Claim 1 to 8, **characterized in that** vinyl acetate in an amount of 70% to 90% by weight and ethylene in an amount of 1% to 30% by weight of ethylene, based in each case on the total weight of the monomers, are copolymerized.

10. Process according to Claim 1 to 9, **characterized in that** mixtures of one or more nonionic emulsifiers and one or more anionic emulsifiers are used.

11. Process according to Claim 10, **characterized in that** the fraction of the nonionic emulsifiers in the mixture is at least 75% by weight, based on the total weight of nonionic and anionic emulsifier.

12. Process according to Claim 1 to 11, **characterized in that** further to the emulsifiers, protective colloids are used as surface-active compounds.

13. Process according to Claim 12, **characterized in that** polyvinyl alcohol is used as protective colloid.

14. Process according to Claim 1 to 13, **characterized in that** polymerization to completion takes place in the low-pressure reactor through to a free monomer content ≤ 1000 ppm.

15. Process according to Claim 1 to 14, **characterized in that** volatile residual monomers are removed in the low-pressure reactor by means of distillation and optionally with inert entraining gases being passed through or over the reactor contents.

16. Process according to Claim 1 to 15, **characterized in that** the total amount of emulsifier and optionally protective colloid is metered in the first pressure reactor.

## Revendications

1. Procédé pour la polymérisation continue en émulsion aqueuse, à amorçage radicalaire, avec un système redox à base d'un composant oxydant et d'un composant réducteur, de A) au moins un ester vinylique et éventuellement au moins un ester d'acide (méth)acrylique, B) éthylène, et C) 0 à 10 % en poids, par rapport au poids total des monomères, d'un ou de plusieurs comonomères à insaturation éthylénique, fonctionnalisés, en présence de 3,0 à 12,5 % en poids, par rapport au poids total des monomères, d'un ou de plusieurs émulsifiants, au moins 50 % en poids, par rapport au poids total des émulsifiants, étant des émulsifiants non ioniques, et 0 à 10 % en poids, par rapport au poids total des monomères, d'un ou de plusieurs colloïdes protecteurs, dans une cascade de récipients à agitation comportant au moins deux réacteurs à pression raccordés en série, et y faisant suite au moins un réacteur à basse pression, éventuellement avant le début de la polymérisation les réacteurs à pression étant remplis à 50 à 80 % du volume avec une dispersion de polymère, en effectuant la polymérisation dans les réacteurs à pression à une température de 50 °C à 90 °C et sous une pression absolue de 10 à 90 bars, et en conduisant la polymérisation en introduisant par addition dosée dans le premier réacteur à pression au moins 80 % en poids du poids total des émulsifiants, et en ajoutant dans le premier réacteur à pression au moins 50 % en poids du poids total, respectivement, de comonomère A) et d'éthylène, en ajoutant dans les réacteurs à pression suivants les quantités restantes des monomères A) et éthylène, et en conduisant la polymérisation dans le premier réacteur à pression jusqu'à un taux de conversion des monomères de ≥ 30 % en poids, par rapport à la quantité totale des monomères utilisés dans le procédé, et dans le dernier réacteur à pression jusqu'à un taux de conversion des monomères de ≥ 90 % en poids, par rapport au poids total des monomères utilisés dans le procédé, et dans lequel on achève la polymérisation dans au moins un réacteur à basse pression, à une température de 30 °C à 60 °C et sous une pression absolue d'au maximum 4 bars.

2. Procédé selon la revendication 1, **caractérisé en ce qu'**on copolymérise en tant que comonomères C) un ou plusieurs composés choisis dans le groupe comprenant des composés siliciés hydrolysables à insaturation éthylénique et des composés à insaturation éthylénique contenant des groupes époxy.

3. Procédé selon la revendication 2, **caractérisé en ce qu'**on copolymérise 0,05 à 5 % en poids d'au moins un composé silicié hydrolysable à insaturation éthylénique et/ou 0,1 à 5 % en poids d'au moins un composé à insaturation éthylénique contenant des groupes époxy, chaque fois par rapport au poids total des monomères.

4. Procédé selon la revendication 2 ou 3, **caractérisé en ce qu'**on copolymérise en tant que comonomères C) un ou plusieurs composés choisis dans le groupe comprenant des γ-acryl- et γ-méthacryloxypropyl-tri(alcoxy)silanes, comportant des groupes alcoxy en C₁-C₁₂ et éventuellement des groupes alkyle en C₁-C₃, et des α-silanes.

5. Procédé selon l'une quelconque des revendications 2 à 4, **caractérisé en ce qu'**on copolymérise en tant que comonomères C) un ou plusieurs composés choisis dans le groupe comprenant l'acrylate de glycidyle, le méthacrylate de glycidyle, l'allylglycidéther et le vinylglycidéther.

6. Procédé selon l'une quelconque des revendications 1 à 5, **caractérisé en ce qu'**en plus des monomères A) et B) et éventuellement C) on copolymérise encore 0,05 à 10 % en poids, par rapport au poids total des monomères, de monomères auxiliaires D).

7. Procédé selon la revendication 6, **caractérisé en ce qu'**on copolymérise en tant que monomères auxiliaires D) un ou plusieurs composés choisis dans le groupe comprenant des acides mono- et dicarboxyliques à insaturation éthylénique, des carboxamides et carbonitriles à insaturation éthylénique, des acides sulfoniques à insaturation éthylénique et leurs sels.

8. Procédé selon l'une quelconque des revendications 1 à 7, **caractérisé en ce qu'**en plus des esters vinyliques on copolymérise en tant que comonomères A) encore jusqu'à 20 % en poids, par rapport au poids total des monomères, d'esters d'acide méthacrylique ou d'esters d'acide acrylique avec des alcools ramifiés ou non ramifiés ayant de 1 à 15 atomes de carbone.

9. Procédé selon l'une quelconque des revendications 1 à 8, **caractérisé en ce qu'**on copolymérise de l'acétate de vinyle en une quantité de 70 à 90 % en poids et de l'éthylène en une quantité de 1 à 30 % en poids d'éthylène, chaque fois par rapport au poids total des monomères.

10. Procédé selon l'une quelconque des revendications 1 à 9, **caractérisé en ce qu'**on utilise des mélanges d'un ou de plusieurs émulsifiants non ioniques et d'un ou de plusieurs émulsifiants anioniques.

11. Procédé selon la revendication 10, **caractérisé en ce que** la proportion des émulsifiants non ioniques dans le mélange est d'au moins 75 % en poids, par rapport au poids total des émulsifiants non ioniques et anioniques.

12. Procédé selon l'une quelconque des revendications 1 à 11, **caractérisé en ce qu'**en plus des émulsifiants on utilise encore des colloïdes protecteurs en tant que composés tensioactifs.

13. Procédé selon la revendication 12, **caractérisé en ce qu'**on utilise comme colloïde protecteur le poly(alcool vinylique).

14. Procédé selon l'une quelconque des revendications 1 à 13, **caractérisé en ce que** dans le réacteur à basse pression on achève la polymérisation jusqu'à une teneur en monomère libre ≤ 1 000 ppm.

15. Procédé selon l'une quelconque des revendications 1 à 14, **caractérisé en ce que** dans le réacteur à basse pression on sépare les monomères résiduels volatils par distillation et éventuellement en faisant passer des gaz inertes d'entraînement dans ou au-dessus du contenu.

16. Procédé selon l'une quelconque des revendications 1 à 15, **caractérisé en ce qu'**on ajoute par addition dosée la quantité totale d'émulsifiant et éventuellement de colloïde protecteur dans le premier réacteur à pression.
